# EUROPÄISCHE PATENTSCHRIFT

(11) **EP 3 348 354 B1**
(45) Veröffentlichungstag und Bekanntmachung des Hinweises auf die Patenterteilung: **08.01.2020**
(21) Anmeldenummer: 17151630.5
(22) Anmeldetag: 16.01.2017
(51) Int. Cl.: B24B 53/075, B24B 53/06, B23F 9/02, B23F 23/12, B23F 19/00

(54) **VERFAHREN ZUM BEARBEITEN VON KEGELRÄDERN UNTER EINSATZ EINER EXZENTRISCH BEWEGTEN, ABRICHTBAREN TOPFSCHLEIFSCHEIBE**
METHOD FOR PROCESSING BEVEL GEARS USING AN ECCENTRICALLY MOVED, DRESSABLE CUP GRINDING DISC
PROCÉDÉ D'USINAGE DE ROUES DENTÉES CONIQUES À L'AIDE D'UNE MEULE BOISSEAU À MOUVEMENT EXCENTRIQUE POUVANT ÊTRE DRESSÉE

(43) Veröffentlichungstag der Anmeldung: 18.07.2018
(73) Patentinhaber: Klingelnberg AG, 8050 Zürich (CH)
(72) Erfinder: Schalaster, Rolf, 42929 Wermelskirchen (DE)
(74) Vertreter: Heusch, Christian

(56) Entgegenhaltungen:
- EP-A1- 2 647 459
- EP-A2- 2 093 007
- WO-A2-2010/025942
- DE-A1-102012 006 581
- DE-A1-102014 111 317
- US-A- 3 127 709

## Beschreibung

Die Erfindung betrifft ein Verfahren zum Bearbeiten von Kegelrädern unter Einsatz einer abrichtbaren Topfschleifscheibe, die exzentrisch bewegt wird.

### Stand der Technik

Es ist bekannt, dass man Kegelräder unter Einsatz eines Schleifwerkzeugs bearbeiten kann. Häufig kommen dabei Topfschleifscheiben zum Einsatz.

Meistens kommen abrichtbare Topfschleifscheiben zum Einsatz. Derartige Topfschleifscheiben werden von Zeit zu Zeit abgerichtet, um ihre Standzeit zu verlängern und um z.B. Abnutzungserscheinungen ausgleichen zu können.

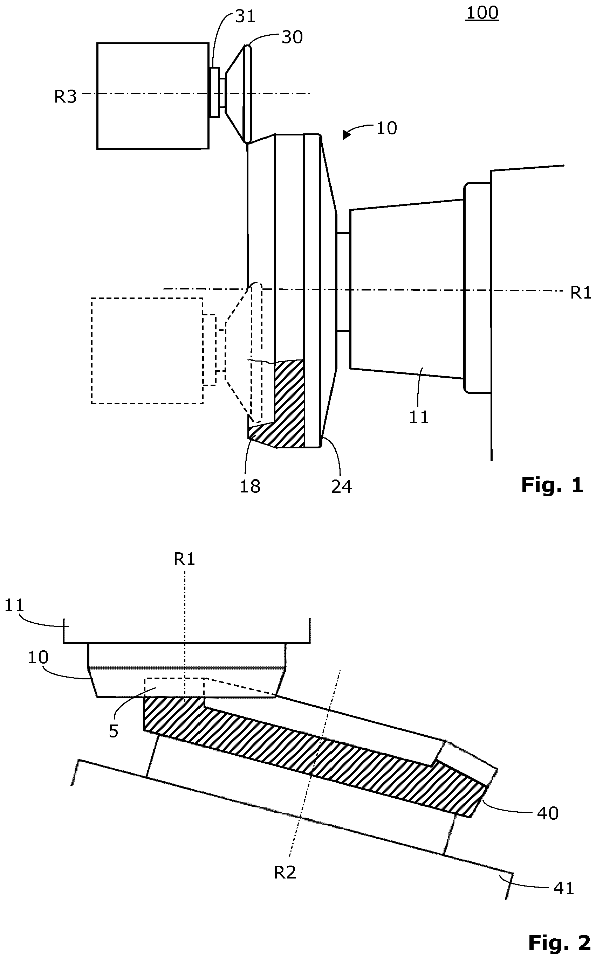

In Fig. 1 ist schematisch angedeutet, wie eine solche topfförmige Schleifscheibe 10 in einer Schleifmaschine 100 mit einer rotationsangetriebenen Abrichtscheibe 30 abgerichtet werden kann. Im gezeigten Moment richtet die Abrichtscheibe 30 die Schleifscheibe 10 am äußeren Umfang ab. Zu diesem Zweck sitzt die Abrichtscheibe 30 außerhalb und oberhalb der Schleifscheibe 10. Um die Topfschleifscheibe 10 in ihrem Innenraum abzurichten, wird die Abrichtscheibe 30 CNC-gesteuert in eine andere, im Inneren der Topfschleifscheibe 10 liegenden Position, gebracht und es wird eine Drehrichtungsumkehr vorgenommen. In Fig. 1 ist die Abrichtscheibe 30 in gestrichelter Darstellung in einer Position zum Abrichten der Innenseite des Profils 28 der Topfschleifscheibe 10 gezeigt. Die CNC-Steuerung (Bahnsteuerung) der Maschine 100 überträgt das erforderliche Profil auf die Schleifscheibe 10, indem die Abrichtscheibe 30 CNC-gesteuert entlang des Profils 18 der Schleifscheibe 10 geführt wird. Weitere Details zu diesem beispielhaft beschriebenen Abrichtvorgang sind z.B. der Patentschrift EP2774721B1 zu entnehmen.

Nur mit einer Topfschleifscheibe 10, deren Maß- und Formgenauigkeit innerhalb enger Toleranzen liegt, kann eine hochgenaue Werkstückbearbeitung durchgeführt werden. Es muss stets gewährleistet werden, dass der Zustand der Topfschleifscheibe 10 prozessfähig ist.

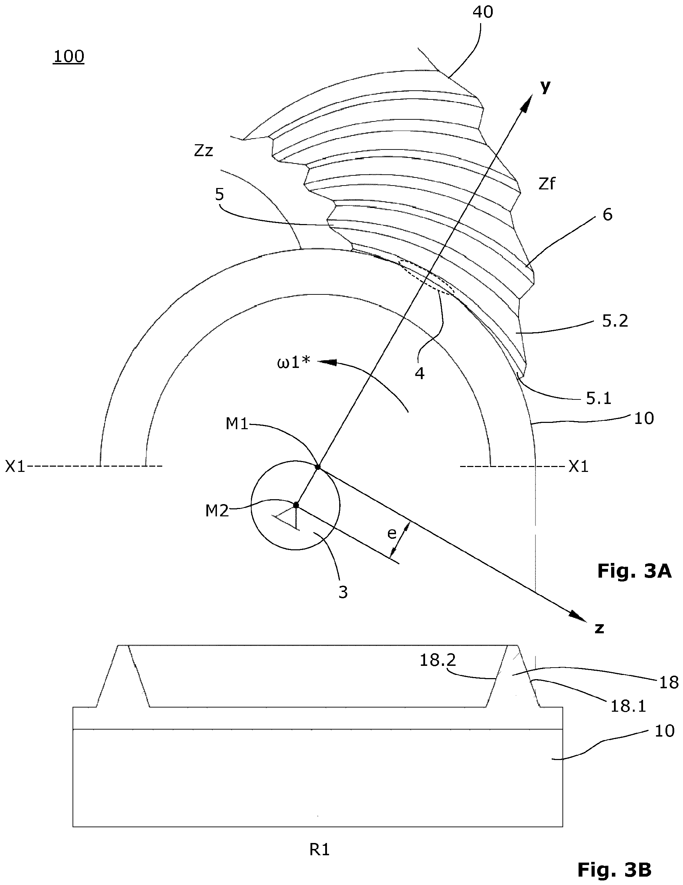

Eine entsprechend abgerichtete Topfschleifscheibe 10 kann z.B. zum diskontinuierlichen Wälzschleifen von Kegelradwerkstücken 40 eingesetzt werden, wie in Fig. 3A gezeigt. Eine solche Topfschleifscheibe 10 kann aber auch zum diskontinuierlichen Profilschleifen (auch Tauchschleifen genannt) von Kegelradwerkstücken 40 eingesetzt werden, wie in Fig. 2 gezeigt.

Mit dem Tauchschleifen lassen sich nur Tellerräder bearbeiten. Mit dem Wälzschleifen hingegen können Kegelradritzel und Tellerräder bearbeitet werden.

Bei dem diskontinuierlichen Tauchschleifen und beim Wälzschleifen geht es um Schleifprozesse nach dem Einzelteilverfahren.

Beim Eintauchen der Schleifscheibe 10 wird beim Tauchschleifen das Profil der Topfschleifscheibe 10 in das Material des zu fertigenden Tellerrades 40 abgebildet. Bei der in Fig. 2 gezeigten Darstellung bearbeitet die Topfschleifscheibe 10 soeben eine einzelne Zahnlücke 5 des Kegelradwerkstücks 40.

Es ist bekannt, dass man der Tauchbewegung der Topfschleifscheibe 10 beim Tauchschleifen und beim Wälzschleifen eine exzentrische Zusatzbewegung des Schleifscheibenmittelpunkts M1 (M1 definiert den Durchtrittspunkt einer entsprechenden Rotationsachse durch die Zeichenebene) überlagern kann, um so Schleifbrand zu vermeiden und um das Zusetzen der Oberfläche der Schleifscheibe 10 mit Metallpartikeln zu verhindern. Details zur exzentrischen Bewegung der Topfschleifscheibe 10 sind z.B. der schematischen Fig. 3A zu entnehmen.

Aus dem Dokument EP 2 647 459 A1 sind eine Schleifmaschine und ein Verfahren mit exzentrisch bewegter Topfschleifscheibe bekannt. Es wird in diesem Dokumente das schleifende Bearbeiten eines Kegelradwerkstücks mit einer exzentrisch bewegten Topfschleifscheibe beschrieben.

Durch das erwähnte Überlagern, bewegt sich der Topfschleifscheibenmittelpunkt M1 auf einer Kreisbahn um einen Mittelpunkt M2 (M2 definiert den Durchtrittspunkt einer entsprechenden Rotationsachse durch die Zeichenebene). Der Radius dieser Kreisbahn wird als Exzenterhub e bezeichnet und ist klein im Vergleich zum Radius der Topfschleifscheibe 10. Aufgrund dieser Bewegung berührt die Topfschleifscheibe 10 das Werkstück 40 geometrisch betrachtet nur entlang einer Linie, die senkrecht zur Zeichenebene der Fig. 3A steht. In der Realität handelt es sich jedoch infolge der relativen Vorschubbewegung um einen lokal begrenzen Bereich 4 entlang der genannten Linie, in dem die Berührung statt findet. Das Verhältnis der Exzenterdrehzahl zur Drehzahl der Topfschleifscheibe 10 ist das sogenannte Exzenterverhältnis EV.

Die exzentrische Zusatzbewegung kann in Schleifmaschinen 100 durch das Einstellen des Exzenterverhältnisses EV, respektive der Exzenterdrehzahl in Form einer festen Vorgabe erfolgen.

In Fig. 3A ist beispielhaft der Waguri-Ansatz gezeigt, bei dem sich eine Topfschleifscheibe 10 um den Scheibenmittelpunkt M1 dreht, der gegenüber dem Mittelpunkt M2 einer Wagurischeibe 3 um einen kleinen Abstand e (Waguri-Exzentrizität genannt) versetzt ist. Das Exzenterverhältnis EV ist als Drehzahl des Exzenters geteilt durch die Drehzahl n1* der Topfschleifscheibe 10 definiert. Die Topfschleifscheibe 10 dreht sich beim Bearbeiten des Werkstücks 40 mit der Winkelgeschwindigkeit ω1* um den Mittelpunkt M1. Die Exzenterbewegung bewirkt für den Mittelpunkt M1 der Topfschleifscheibe 10 eine Kreisbewegung um M2. Diese Kreisbewegung hat Bewegungskomponenten in x-Richtung und in y-Richtung.

Fig. 3B zeigt einen Schnitt entlang der Linie X1-X1 durch die Topfschleifscheibe 10. In Fig. 3B kann man das Profil 18 der Topfschleifscheibe 10 erkennen. Die umlaufende Außenfläche am Profil 18 wird mit dem Bezugszeichen 18.1 und die umlaufende Innenfläche mit dem Bezugszeichen 18.2 bezeichnet.

Durch die überlagerte Exzenterbewegung wird erreicht, dass ein (zu) großer Flächenkontakt zwischen dem Aussenumfang 18.1 des Profils 18 der Topfschleifscheibe 10 und der gesamten Fläche der konkaven Flanke 5.1 des Werkstücks 40 bzw. zwischen dem Innenumfang 18.2 des Profils 18 der Topfschleifscheibe 10 und der gesamten Fläche der konvexen Flanke 5.2 vermieden wird.

Bei sonst konstanten Verhältnissen hängen die Häufigkeit der Berührung der Topfschleifscheibe 10 mit der Zahnflanke 5.1 oder 5.2, die Lage dieses Berührbereichs auf der Topfschleifscheibe 10 und die Phasenlage der Berührung von konkaver und konvexer Zahnflanke 5.2, 5.1 vom gewählten Exzenterverhältnis EV ab.

Ist das Exzenterverhältnis EV = 1, so dreht sich der Exzenter 3 bei einer Vollumdrehung der Topfschleifscheibe 10 einmal. Die Topfschleifscheibe 10 berührt somit bei jeder Vollumdrehung einmal die konkave Flanke 5.1 der Zahnlücke 5 (bei 0°) und einmal die konvexe Flanke 5.2 der Zahnlücke 5 (bei 180°). Die Berührung findet immer im gleichen Bereich statt. Ist das Exzenterverhältnis EV = 2, so erfolgen zwei Berührungen der Topfschleifscheibe 10 mit der konkaven Flanke 5.1 der Zahnlücke 5 (bei 0° und 180°) respektive mit der konvexen Flanke 5.2 der Zahnlücke 5 (bei 90° und 270°) während einer Vollumdrehung der Topfschleifscheibe 10. Diese Gradangaben beziehen sich jeweils auf ein ortsfestes y-z-Koordinatensystem der Topfschleifscheibe 10 und in den genannten Sonderfällen findet keine Verschiebung der Berührbereiche entlang des Schleifscheibenumfangs von Vollumdrehung der Topfschleifscheibe 10 zu Vollumdrehung statt.

Das Exzenterverhältnis EV, das vorgegeben wird, kann auch eine rationale Zahl 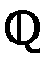 sein. Ein praktisches Beispiel ist ein Exzenterverhältnis von EV = 0,7. Wenn die Topfschleifscheibe 10 mehrere Vollumdrehungen ausführt, verlagern sich die Berührbereiche immer weiter und es wird letztendlich der gesamte Schleifscheibenumfang am Profil 18 zum schleifenden Bearbeiten eingesetzt.

Durch die Exzenterbewegung lässt sich ein unerwünscht großer Flächenkontakt zwischen der Topfschleifscheibe 10 und dem Werkstück 40 vermeiden. Details zur Überlagerung einer zyklischen Exzenterbewegung sind zum Beispiel den deutschen Offenlegungsschriften DE 2721164 A und DE 2445483 A zu entnehmen.

Praktische Untersuchungen haben gezeigt, dass gewälzte Kegelräder, die unter Verwendung der Exzenterbewegung geschliffen wurden, eine Oberfläche mit optisch sichtbaren Schattierungen aufweisen können. Darüber hinaus können diese Bauteile im Betrieb ein auffälliges Geräuschverhalten zeigen, das auf Welligkeiten der Zahnflanken zurückzuführen ist.

Von daher liegt der Erfindung die Aufgabe zugrunde, einen Ansatz bereit zu stellen, der es ermöglicht dieses ungewöhnliche Geräuschverhalten zu vermeiden.

Die Aufgabe wird erfindungsgemäss durch ein Verfahren gemäss Patentanspruch 1 gelöst.

Das Verfahren der Erfindung wird in einer Schleifmaschine ausgeführt wird, die umfasst:
- eine mit einer abrasiven Oberfläche versehenen Topfschleifscheibe,
- eine Werkzeugspindel zur Aufnahme und zum Drehantreiben der Topfschleifscheibe um eine Werkzeug-Rotationsachse,
- ein Abrichtwerkzeug, das zum Abrichten der Topfschleifscheibe ausgelegt is,
- eine Abrichtspindel zur Aufnahme des Abrichtwerkzeugs und zum Drehantreiben des Abrichtwerkzeugs um eine Abricht-Rotationsachse,
- ein Kegelradwerkstück,
- eine Werkstückspindel zur Aufnahme und zum Drehantreiben des Kegelradwerkstücks um eine Werkstück-Rotationsachse, wobei die Werkzeugspindel mit einem Exzenterantrieb versehen ist, dessen Exzenterverhältnis vorgebbar ist.

Das Verfahren der Erfindung umfasst bei allen Ausführungsformen die folgenden Abrichtschritte:
a) Drehantreiben der Topfschleifscheibe um die Rotationsachse der Werkzeugspindel mit einer ersten Drehzahl,
b) Drehantreiben des Abrichtwerkzeugs um die Rotationsachse der Abrichtspindel mit einer zweiten Drehzahl,
c) Durchführen eines Abrichtverfahrens, bei dem die Topfschleifscheibe mit dem Abrichtwerkzeug abgerichtet wird, wobei während dieses Schrittes zwischen der ersten Drehzahl und der zweiten Drehzahl ein vorbestimmtes, festes Drehzahlverhältnis vorgegeben wird,
und mit den folgenden Bearbeitungsschritten, die nach dem Durchführen der Abrichtschritte ausgeführt werden:
i. exzentrisches Drehantreiben der Topfschleifscheibe um die Rotationsachse der Werkzeugspindel mit einer ersten Bearbeitungsdrehzahl unter Einsatz des Exzenterantriebs,
ii. Durchführen eines Schleifverfahrens, bei dem das Kegelradwerkstück mit der Topfschleifscheibe schleifend bearbeitet wird.

Die Erfindung basiert auf einem ganzheitlichen Ansatz, der das Zusammenwirken des Abrichters beim Abrichtvorgang mit der Topfschleifscheibe und das Zusammenwirken der entsprechend abgerichteten Topfschleifscheibe mit dem Kegelradwerkstück optimiert. Das Entwickeln dieses Ansatzes wurde erst möglich, nachdem andere Fehler und Ungenauigkeiten bisheriger Abrichtvorgänge und Schleifvorgänge systematisch ausgeschlossen wurden.

Es hat sich dann bei genauen Untersuchungen gezeigt, dass die Konditionen des Abrichtvorgangs negativen Einflüsse auf das schleifende Bearbeiten der Werkstücke haben können, die bisher so nicht erkannt worden sind.

Gemäss Erfindung werden daher die entsprechenden Drehzahlverhältnisse speziell aufeinander abgestimmt.

Zu diesem Zweck wird z.B. bei allen Ausführungsformen ein festes Drehzahlverhältnis für das Abrichten vorgegeben, das entweder definiert ist als Verhältnis der ersten Drehzahl zur zweiten Drehzahl oder als Verhältnis der zweiten Drehzahl zur ersten Drehzahl.

Vorzugsweise entspricht der Wert des festen Drehzahlverhältnisses beim Abrichten einer natürlichen Zahl 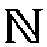 . Besonders vorzugsweise entspricht der Wert des festen Drehzahlverhältnisses einer natürlichen Zahl 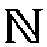 der Menge {1, 2, 3, 4 ... 10}.

Es sind aber auch Ausführungsformen möglich, bei denen das feste Drehzahlverhältnis beim Abrichten als Bruch zweier natürlicher Zahlen 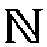 definiert ist. Besonders vorzugsweise entspricht der Wert des festen Drehzahlverhältnisses einem Bruch der Menge {½, 1/3, 2/3, ¼, ¾}.

Bei bevorzugten Ausführungsformen wird für ein festes Drehzahlverhältnis ein Exzenterverhältnis (meistens aus einer Reihe von mehreren geeigneten Exzenterverhältnissen) ermittelt und beim Exzenterschleifen des Kegelradwerkstücks zum Einsatz gebracht. Der Einsatz eines solchen Exzenterverhältnisses ist jedoch optional, kann jedoch dazu dienen, um noch bessere Ergebnisse in Sachen Geräuschverhalten zu liefern.

Die Erfindung lässt sich vor allem für die Fein- bzw. Nachbearbeitung von Kegelradwerkstücken einsetzen.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben.
- **FIG. 1**: zeigt eine schematische Seitenansicht eines Teils einer Schleifmaschine mit einer Topfschleifscheibe, die mittels einer Abrichtscheibe am Aussenumfang abgerichtet wird (das Abrichten des Innenumfangs mit der Abrichtscheibe ist in strichlierter Darstellung angedeutet);
- **FIG. 2**: zeigt eine stark schematisierte Seitenansicht einer Topfschleifscheibe beim Tauchschleifen eines Kegelradwerkstücks, wobei das Kegelradwerkstück im Axialschnitt gezeigt ist;
- **FIG. 3A**: zeigt eine stark schematisierte, nicht-maßstäbliche Ansicht einer Topfschleifscheibe, die in bekannter Art und Weise auf einer Wagurischeibe exzentrisch gelagert ist und die im gezeigten Moment eine Zahnlücke eines Tellerrad-Werkstücks bearbeitet;
- **FIG. 3B**: zeigt eine stark schematisierte Schnittansicht der Topfschleifscheibe nach Fig. 3A entlang der Linie X1-X1;
- **FIG. 4A**: zeigt eine stark schematisierte Schnittansicht einer Topfschleifscheibe im Radialschnitt, die im gezeigten Moment in bekannter Art und Weise mit einer Abrichtscheibe am Aussenumfang abgerichtet wird;
- **FIG. 4B**: zeigt eine stark schematisierte Seitenansicht der Topfschleifscheibe der Fig. 4A nach dem Abrichten mit der Abrichtscheibe der Fig. 4A mit identischen Drehzahlen;
- **FIG. 4C**: zeigt eine stark schematisierte Seitenansicht der Topfschleifscheibe der Fig. 4A nach dem Abrichten mit der Abrichtscheibe der Fig. 4A mit ungleichen Drehzahlen;
- **FIG. 5**: zeigt eine perspektivische Ansicht einer beispielhaften Vorrichtung, in der das Verfahren der Erfindung ausgeführt werden kann.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

Die Erfindung basiert auf einem ganzheitlichen Ansatz, der das Zusammenwirken des Abrichters 30 beim Abrichtvorgangs mit der Topfschleifscheibe 10 und das Zusammenwirken der entsprechend abgerichteten Topfschleifscheibe 10 mit dem Kegelradwerkstück 40 optimiert, um so indirekt das Geräuschverhalten der Kegelradwerkstück 40 zu beeinflussen.

Die Lösung der Erfindung wurde erst durch eine genaue Analyse der komplexen Zusammenhänge und der gegenseitigen Abhängigkeiten möglich. Im Folgenden werden die Ergebnisse dieser Analysen anhand stark vereinfachter Beispiele und Abbildungen erläutert, bevor Details der erfindungsgemäßen Lösung beschrieben werden.

Es wird im Folgenden unter anderem auf die Figuren 1, 2 sowie 3A und 3B und auf deren Beschreibung Bezug genommen.

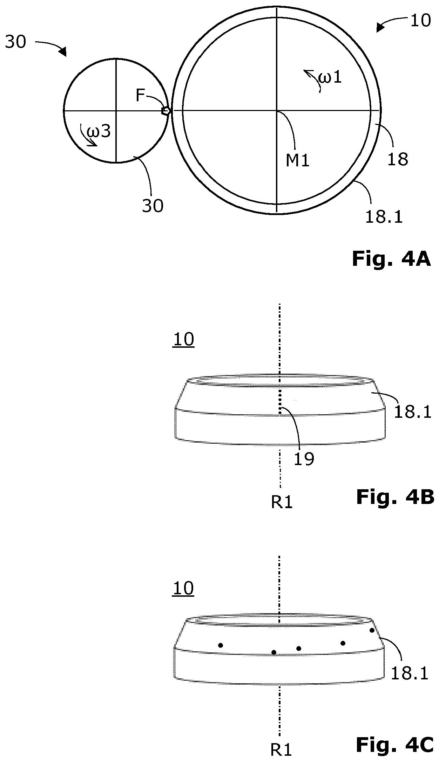

In Fig. 4A ist eine Draufsicht einer Topfschleifscheibe 10 und einer Abrichtscheibe 30 in einer ersten, stark schematisierten Momentaufnahme gezeigt. Das Profil 18 ist nur als Horizontalschnitt (auch Radialschnitt genannt) gezeigt. Die Abrichtscheibe 30 ist als Scheibe dargestellt, deren Durchmesser hier 50% des Aussendurchmessers des Profils 18 beträgt. Typischerweise hat die Abrichtscheibe 30 einen Durchmesser, der deutlich kleiner ist als der Aussendurchmesser der Topfschleifscheibe 10. An dem Aussenumfang der Abrichtscheibe 30 ist durch ein kleines Symbol eine Fehlerstelle F gezeigt. Es kann sich z.B. um ein Diamantkristall handeln, der gegenüber den anderen Kristallen eine etwas andere Orientierung hat. Die Abrichtscheibe 30 kann aber z.B. auch einen Rundlauffehler aufweisen, der sich z.B. durch einen leichten Schlag oder Hub im Bereich des Symbols F zeigen kann. Das im Folgenden beschriebene Prinzip gilt sowohl für Abrichtscheiben 30 mit Fehlerstellen F der Oberfläche, als auch für Abrichtscheiben 30 mit Rundlauffehler.

Beim Abrichten hat man bisher stets ein Geschwindigkeitsverhältnis vorgegeben, um ein optimales Abrichtergebnis zu erzielen. Das Geschwindigkeitsverhältnis wird meist durch den Abrichtfaktor definiert. Der Abrichtfaktor ist als Verhältnis von Abrichtrollenumfangsgeschwindigkeit und Schleifscheibenumfangsgeschwindigkeit definiert.

Die Drehgeschwindigkeit ω3 der Abrichtscheibe 30 und die Drehgeschwindigkeit ω1* der Topfschleifscheibe 10 wurden entsprechend gesteuert, um im Bereich der momentanen Wechselwirkung die gewünschte relative Schnittgeschwindigkeit zu erzielen.

Im Folgenden wird hingegen mit den Drehzahlen n1 der Topfschleifscheibe 10 und n3 der Abrichtscheibe 30 gearbeitet. Die Drehzahlen sind nämlich Grössen, die unabhängig sind vom Radius bzw. Durchmesser.

Wenn die beiden Drehzahlen übereinstimmen, d.h. wenn n1 = n3 gilt, dann berührt die Fehlerstelle F oder der Rundlauffehler der Abrichtscheibe 30 die umlaufende Aussenfläche 18.1 nur einmal pro Vollumdrehung. Falls beim Abrichten keine anderen Relativbewegungen durchgeführt werden, so würde diese Fehlerstelle F oder der Rundlauffehler immer wieder den selben Punkt an der Aussenfläche 18.1 der Topfschleifscheibe 10 treffen.

In Fig. 4B ist eine Seitenansicht einer Topfschleifscheibe 10 nach dem Abrichten mit einer Abrichtscheibe 30 der Fig. 4A gezeigt. Falls die Abrichtscheibe 30 beim Abrichten relativ zur Topfschleifscheibe 10 parallel zur Richtung der Rotationsachse R1 bewegt wird (achsparalleler Abrichtvorschub genannt) und falls die Vorgabe n1 = n3 weiterhin gilt, so ergeben sich entlang einer achsparallelen Linie eine Reihe von Oberflächenstörungen. In Fig. 4B sind die Zentren dieser Oberflächenstörungen durch die Punkte einer gepunkteten Linie 19 dargestellt.

Falls man, wie dies bisher der Fall war, eine geeigneten Abrichtfaktor für das Abrichten anhand einer gewünschten relativen Schnittgeschwindigkeit vorgibt, dann ergibt sich nahezu in allen Fällen ein Drehzahlverhältnis DV = n1/n3, das nicht ganzzahlig ist, da der Abrichtfaktor durch die Radien und durch die jeweiligen Winkelgeschwindigkeiten ω1 und ω3 der Topfschleifscheibe 10 und der Abrichtscheibe 30 bestimmt wird. In der Praxis das Drehzahlverhältnis DV daher durch eine irrationale Zahl definiert.

Wenn man von einer realen Topfschleifscheibe 10 ausgeht, deren Seitenansicht beispielsweise in Fig. 3B gezeigt ist, dann ist weiterhin zu berücksichtigen, dass deren Aussenumfang veränderlich ist, da das Profil 18 eine Kegelform hat. D.h. der effektive wirksame Durchmesser der Topfschleifscheibe 10 und damit auch die Schnittgeschwindigkeit ändern sich mit dem Abrichtvorschub. Wenn man also, wie bisher üblich, eine bestimmte relative Schnittgeschwindigkeit einhalten möchte, so muss man die Drehzahl n1 der Topfschleifscheibe 10 und/oder die Drehzahl n3 der Abrichtscheibe 30 ändern, während die Abrichtscheibe 30 z.B. einen achsparallelen Abrichtvorschub ausführt.

Wenn man nun von einem irrationalen Drehzahlverhältnis n1/n3 ausgeht, das sich in der Praxis bisher stets ergibt, und wenn man dies auf das Beispiel der Figuren 4A, 4B anwendet, dann wird sofort ersichtlich, dass sich eine komplizierte, Verteilung der Oberflächenstörungen an der umlaufenden Aussenfläche 18.1 ergibt. In Fig. 4C ist eine solche Verteilung in vereinfachter Form durch mehrere Oberflächenstörungen symbolisiert, die quasi beliebig auf der Aussenfläche 18.1 verteilt sind. Die Oberflächenstörungen sind hier schematisch durch mehrere schwarze Punkte dargestellt.

Im folgenden Gedankenschritt wird nun von einer realen Abrichtscheibe 30 ausgegangen, deren Oberfläche nicht nur eine Fehlerstelle F sondern einen ganze Anzahl von Fehlerstellen aufweist und/oder die einen Rundlauffehler hat. Diese Fehlerstellen können z.B. entlang des Umfangs der Abrichtscheibe 30 verteilt sein.

Wenn nun mit einer realen Abrichtscheibe 30, die zahlreiche Fehlerstellen und/oder einen Rundlauffehler hat, einen Abrichtvorgang der Aussenfläche 18.1 mit irrationalen Drehzahlverhältnissen n1/n3 durchgeführt wird, bei dem die Abrichtscheibe 30 relativ zur Topfschleifscheibe 10 eine achsparallele Abrichtbewegung parallel zur Richtung der Rotationsachse R1 ausführt, so ergibt sich letztendlich eine zufällige Verteilung von mehr oder weniger starken Oberflächenstörungen auf der gesamten Aussenfläche 18.1. Analog können beim Abrichten der Innenfläche 18.2 auch zufällig verteilte Oberflächenstörungen auf der gesamten Innenfläche 18.2 auftreten.

In der Praxis sind diese Zusammenhänge noch deutlich komplizierter als hier dargestellt. Daher können sich an der Topfschleifscheibe 10 Winkelfehler, Balligkeitsfehler und Welligkeiten ergeben, die sich z.B. entlang des Umfangs der Topfschleifscheibe 10 verändern.

Im nächsten Gedankenschritt wird nun die Exzenter-Tauchbearbeitung eines Kegelradwerkstücks 40 mit einer realen Topfschleifscheibe 10 vorgenommen, deren Aussenfläche 18.1 eine zufällige Verteilung von Oberflächenstörungen aufweist. Bei der Exzenter-Tauchbearbeitung handelt es sich um einen diskontinuierlichen Prozess, bei dem sich das Kegelradwerkstück 40 während des Schleifens nicht dreht. Beim Tauchen wird lediglich eine relative Tiefenzustellung vorgenommen, während der Drehbewegung ω1* der Topfschleifscheibe 10 eine Exzentrizität überlagert wird, wie bereits beschrieben. Eine Momentaufnahme einer Exzenter-Tauchbearbeitung ist in Fig. 2 gezeigt.

Das Verfahren der Erfindung lässt sich jedoch auch auf das Exzenter-Wälzschleifen anwenden. Auch das Exzenter-Wälzschleifen ist ein diskontinuierlicher Prozess, bei dem Zahnlücke für Zahnlücke des Kegelradwerkstücks 40 bearbeitet wird. Die Drehbewegung ω2* des Kegelradwerkstücks 40 ist beim Exzenter-Wälzschleifen mit der Drehbewegung ω1* der Topschleifscheibe 10 gekoppelt.

Beim Wälzschleifen erfolgt ein Linienkontakt z.B. zwischen der Zahnflanke 5.1 und der Topfschleifscheibe 10. Die Wälzbewegung erfolgt beim Wälzschleifen von der Zahnferse Zf (siehe Fig. 3A) am äußeren Durchmesser bis zur Zahnzehe Zz (siehe Fig. 3A) am inneren Durchmesser des Kegelradwerkstücks 40 oder umgekehrt.

Beim Wälzschleifen entsteht durch die Berührung von Kegelradwerkstück 40 und Topfschleifscheibe 10 eine Berührlinie entlang der Zahnflanke, woraus Bahnen der Schleifkörner am Berührpunkt bzw. der Berührlinie entstehen. Durch die Wälzbewegung verändert sich die Lage dieser Berührlinie stetig.

Durch das Überlagern einer Exzenterbewegung wird die Berührlinie auf einen Berührpunkt reduziert, der innerhalb eines Winkelbereichs der Exzenterumdrehung auf der Berührlinie entlangwandert.

Wird nun, wie eingangs beschrieben, ein Exzentrizitätsfaktor von z.B. 1 vorgegeben, so gibt es pro Vollumdrehung der Topfschleifscheibe 10 eine Berührung der Aussenfläche 18.1 der Topfschleifscheibe 10 mit der konkaven Flanke 5.1 der Zahnlücke 5, die soeben geschliffen wird. Da die Topfschleifscheibe 10 beim Schleifen aufgrund der gekoppelten Wälzbewegung durch die Zahnlücke 5 bewegt wird, während die Topfschleifscheibe 10 z.B. fünf Vollumdrehungen ausführt, kommt es zu fünf Berührungen zwischen der Aussenfläche 18.1 der Topfschleifscheibe 10 und der konkaven Flanke 5.1. Aufgrund der erwähnten Wälzbewegung der Topfschleifscheibe 10 durch die Zahnlücke 5, wandern die Berührungen entlang der konkaven Flanke 5.1 z.B. von der Zahnferse Zf zur Zahnzehe Zz.

Auch wenn die Oberflächenstörungen auf der Aussenfläche 18.1 zufällig verteilt sind, bilden sich aufgrund des ganzzahligen Exzentrizitätsfaktors gleichmässig wiederkehrende Oberflächenstörungen auf der konkaven Flanke 5.1.

Untersuchungen haben gezeigt, dass diese gleichmässig wiederkehrenden Oberflächenstörungen einen deutlichen Einfluss auf das Geräuschverhalten solcher Kegelradwerkstücke 40 haben können. Es treten bei exzenter-tauchgeschliffenen Kegelradwerkstücken 40 z.B. Fehler in Profilrichtung auf. Bei exzenter-wälzgeschliffenen Kegelradwerkstücken 40 können abhängig von der Schleif- und Exzenterspindeldrehzahl unterschiedliche Wellenmuster auftreten.

An diesem Punkt setzt die Erfindung an. Es wurden Sachverhalte heraus kristallisiert, die einander gegenseitig beeinflussen und die letztendlich zu unerwünschten Oberflächenstörungen am Kegelradwerkstück 40 führen können.

Gemäß Erfindung wurde daher ein spezielles Verfahren entwickelt, um zu vermeiden, dass sich Oberflächenstörungen ergeben, die in einer unerwünschten Art und Weise eine Form der Periodizität aufweisen. Oberflächenstörungen an sich sind prozeßinheränt, aber es ist unter Einhaltung bestimmter Voraussetzungen möglich zu verhindern, dass sich diese Oberflächenstörungen ungünstig wiederholen oder dass sie sich auf andere Art und Weise ungünstig am Werkstück überlagern.

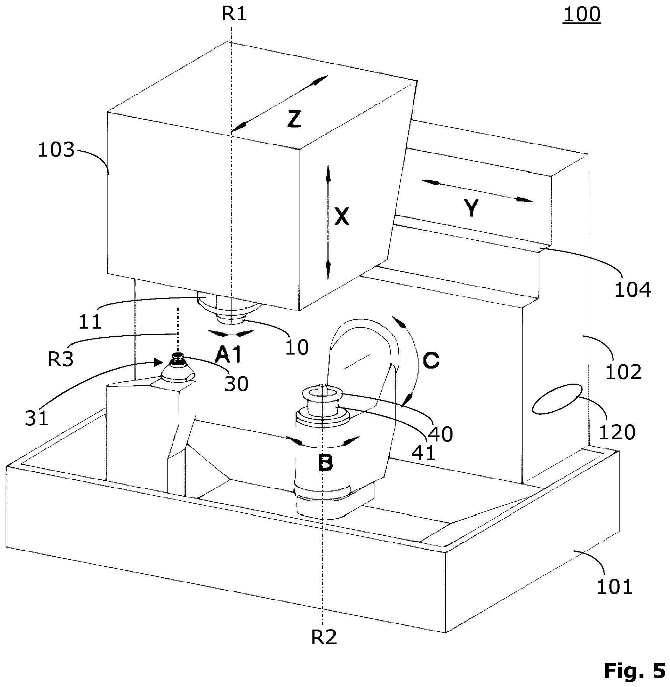

Das Verfahren der Erfindung ist dazu ausgelegt in einer Schleifmaschine 100 (hier allgemein als Vorrichtung 100 bezeichnet) ausgeführt zu werden. Die Schleifmaschine 100 umfasst, wie beispielhaft in Fig. 1 und 5 gezeigt, eine Werkzeugspindel 11 zur Aufnahme und zum Drehantreiben einer mit abrasiven Oberflächen 18.1, 18.2 versehenen Topfschleifscheibe 10. Ausserdem umfasst sie eine Abrichtspindel 31 zur Aufnahme und zum Drehantreiben eines Abrichtwerkzeugs 30, das zum Abrichten der Topfschleifscheibe 10 ausgelegt. Weiterhin ist eine Werkstückspindel 41 zur Aufnahme und zum Drehantreiben eines Kegelradwerkstücks 40 vorgesehen, und die Werkzeugspindel 11 ist mit einem Exzenterantrieb 3 versehen, dessen Exzenterfaktor vorgegeben werden kann. Der Exzenterantrieb 3 kann beispielweise so ausgelegt sein, wie in Fig. 3A gezeigt.

Das Verfahren, das in einer solchen Schleifmaschine 100 ausgeführt wird, umfasst bei allen Ausführungsformen die folgenden Abrichtschritte:
- Drehantreiben der Schleifscheibe 10 um eine Rotationsachse R1 der Werkzeugspindel 11 mit einer ersten (Abricht-)Drehzahl n1,
- Drehantreiben des Abrichtwerkzeugs 30 um eine Rotationsachse R3 der Abrichtspindel 31 mit einer zweiten (Abricht-)Drehzahl n3,
- Durchführen eines Abrichtverfahrens, bei dem die Schleifscheibe 10 mit dem Abrichtwerkzeug 30 abgerichtet wird, wobei während dieses Schrittes zwischen der ersten (Abricht-)Drehzahl n1 und der zweiten (Abricht-)Drehzahl n3 ein exakt vorbestimmtes, festes Drehzahlverhältnis DV vorgegeben wird.

Zu diesem Zweck wird z.B. bei allen Ausführungsformen ein festes Drehzahlverhältnis DV vorgegeben, das entweder definiert ist als Verhältnis der ersten Drehzahl n1 zur zweiten Drehzahl n3 (d.h. DV = n1/n3) oder als Verhältnis der zweiten Drehzahl zur ersten Drehzahl (d.h. DV = n3/n1).

Vorzugsweise entspricht der Wert des festen Drehzahlverhältnisses DV einer natürlichen Zahl 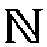 . Besonders vorzugsweise entspricht der Wert des festen Drehzahlverhältnisses DV einer natürlichen Zahl 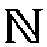 der Menge {1, 2, 3, 4 ... 10}.

Es sind aber auch Ausführungsformen möglich, bei denen das feste Drehzahlverhältnis DV als Bruch zweier natürlicher Zahlen 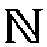 definiert ist. Besonders vorzugsweise entspricht der Wert des festen Drehzahlverhältnisses DV einem Bruch der Menge {½, 1/3, 2/3, ¼, ¾}.

Durch diese erste Maßnahme und durch die beschriebenen Abrichtschritte mit exakt vorbestimmtem, festem Drehzahlverhältnis DV wird bewirkt, dass sich keine erratische, sondern eine relativ gleichmäßige Verteilung der Oberflächenstörungen entlang der Oberflächen 18.1, 18.2 der Topfschleifscheibe 10 ergeben. So bildet sich ein Rundlauffehler der Abrichtscheibe 30 exakt als Rundlauffehler der Schleifscheibe 10 aus (kinematische Abweichungen aus dem Abrichtrollenradius werden hierbei vernachlässigt) wenn man z.B. von einem Drehzahlverhältnisses DV = 1, 2 oder z.B. ½ ausgeht.

Nun wird eine so abgerichtete Topfschleifscheibe 10 im Rahmen der folgenden Bearbeitungsschritte zum Schleifen eines Kegelradwerkstücks 40 eingesetzt. Diese Bearbeitungsschritte werden nach dem Durchführen der Abrichtschritte ausgeführt.
- Drehantreiben der Topfschleifscheibe 10 um die Rotationsachse R1 der Werkzeugspindel 11,
- Durchführen eines Exzenter-Schleifverfahrens, bei dem das Kegelradwerkstück 40 mit der Topfschleifscheibe 10 bearbeitet wird. D.h. es kommt beim Schleifen des Kegelradwerkstücks 40 stets ein Exzenterantrieb 3 zum Einsatz.

Während des Schleifens des Kegelradwerkstücks 40 wird vorzugsweise bei allen Ausführungsformen ein Exzenterverhältnis EV für den Exzenterantrieb 3 vorgegeben, das ungleich 1 ist.

Bei der Festlegung des Exzenterverhältnisses EV, wie es bei einem Teil der Ausführungsformen vorgenommen werden kann, ist zu beachten, dass dieses Exzenterverhältnis EV ohne relative (Shift-)Bewegungen zwischen der Topfschleifscheibe 10 und dem Kegelradwerkstück 40 definiert ist. Anderes ausgedrückt, bleiben beim Festlegen eines Exzenterverhältnisses EV Schwankungen des Exzenterverhältnisses EV unberücksichtigt, die sich z.B. aus relative (Shift-)Bewegungen zwischen der Topfschleifscheibe 10 und dem Kegelradwerkstück 40 ergeben.

Besonders geeignet sind Exzenterverhältnisse EV, die keiner natürlichen Zahl 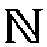 entsprechen. D.h. im Rahmen der Erfindung sind gebrochene Zahlen besonders als Exzenterfaktoren EV geeignet. Alternativ können z.B. auch Exzenterverhältnisse gewählt werden, die einer geraden oder ungeraden natürlichen Zahl ≥ 1 entsprechen (z.B. 1, 2, 3, 4 oder 5).

Durch diese zweite optionale Maßnahme kann bewirkt werden, dass sich keine periodisch wiederholenden Oberflächenstörungen der Zahnflanken 5.1, 5.2 des Kegelradwerkstücks 40 ergeben. Dies gilt vor allem für das Exzenter-Wälzschleifen von Kegelradwerkstücken 40.

Eine beispielhafte Vorrichtung 100 ist in Fig. 5 dargestellt. Die Verfahrensschritte der Erfindung können bei allen Ausführungsformen z.B. in einer (Maschinen-)Steuerung 120 der Vorrichtung 100 implementiert sein. Die Vorrichtung 100 kann aber bei allen Ausführungsformen z.B. auch von extern gesteuert werden, um die Schritte des Verfahrens der Erfindung auszuführen. In Fig. 5 ist die (Maschinen-)Steuerung 120 durch eine Ellipse symbolisiert.

Besonders geeignet ist eine Vorrichtung 100 mit einer Werkstückspindel 41 zur Aufnahme eines Kegelradwerkstücks 40 und einer Werkzeugspindel 11 zur Aufnahme der Topfschleifscheibe 10. Die Vorrichtung 100 weist mehrere Antriebe zum Bearbeiten des Kegelradwerkstücks 40 auf. Die Antriebe sind hinter Verkleidungen der Vorrichtung 100 verdeckt. Weiterhin umfasst die beispielhaft gezeigte Vorrichtung 100 ein Maschinenbett 101. An einem Ständer 102, der sich parallel zu der x-y-Ebene erstreckt, ist ein Schlitten 103 vorgesehen, der entlang horizontal verlaufender Schienen 104 parallel zur Y-Achse verschiebbar ist. Der Schlitten 103 trägt die Werkzeugspindel 11 und kann translatorische Bewegungen in X und Z-Richtung ausführen.

Die Vorrichtung 100 umfasst zusätzlich eine Abrichtspindel 31, die hier eine Abrichtscheibe 30 trägt. Der Drehantrieb, der das Drehen der Topfschleifscheibe 10 um die Rotationsachse R1 bewirkt, wird auch als A1-Drehantrieb bezeichnet. Ein B-Drehantrieb dreht das Kegelradwerkstück 40 um die Rotationsachse R2. Beim schleifenden Bearbeiten des Kegelradwerkstücks 40 mit der Topfschleifscheibe 10, werden deren Drehbewegungen (elektronisch) gekoppelt. Die entsprechenden Antriebe der Vorrichtung 100 werden hier auch mit den Buchstaben X, Y, Z, A1 und B bezeichnet. Die Vorrichtung 100 kann zusätzlich eine Schwenkachse C mit einem entsprechenden Schwenkantrieb aufweisen, wie in Fig. 5 gezeigt.

**Bezugszeichen:**

| | |
|---|---|
| Waqurischeibe/Exzenter | 3 |
| Bereich | 4 |
| Zahnlücke | 5 |
| Konkave Zahnflanke | 5.1 |
| Konvexe Zahnflanke | 5.2 |
| | |
| Schleifscheibe / Topfschleifscheibe | 10 |
| Werkzeuqspindel | 11 |
| Bereich / Profil | 18 |
| umlaufende Außenfläche | 18.1 |
| umlaufende Innenfläche | 18.2 |
| Linie | 19 |
| | |
| Abrichtwerkzeug/Abrichtscheibe | 30 |
| Abrichtspindel | 31 |
| Bereich / Profil | 38 |
| | |
| Keqelradwerkstück | 40 |
| Werkstückspindel | 41 |
| | |
| Vorrichtung/ Maschine/Schleifmaschine | 100 |
| Maschinenbett | 101 |
| Ständer | 102 |
| Schlitten | 103 |
| Schienen | 104 |
| | |
| (Maschinen-)Steuerung | 120 |
| | |
| Drehzahlverhältnis | DV |
| Abstand | e |
| Exzenterverhältnis | EV |
| Fehlerstelle | F |
| Scheibenmittelpunkt | M1 |
| Mittelpunkt | M2 |
| natürlichen Zahlen | 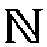 |
| Drehzahl | n1 |
| Bearbeitunqsdrehzahl | n1* |
| Abricht-Drehzahl | n3 |
| | |
| rationale Zahl | Q |
| Werkzeuq-Rotationsachse | R1 |
| Abricht-Rotationsachse | R3 |
| Werkstück-Rotationsachse | R2 |
| Winkelgeschwindigkeit beim Abrichten | ω1 |
| Winkelgeschwindigkeit beim Bearbeiten | ω1* |
| Winkelgeschwindigkeit beim Bearbeiten | ω2* |
| Winkelgeschwindigkeit beim Abrichten | ω3 |
| Koordinatensystem | x, y |
| Antriebe | X, Y, Z, B, C, A1 |
| Schnitt | X1 - X1 |
| Zahnferse | Zf |
| Zahnzehe | Zz |

## Patentansprüche

1. Verfahren, das in einer Schleifmaschine (100) ausgeführt wird, die umfasst:
- eine mit einer abrasiven Oberfläche (18.1, 18.2) versehenen Topfschleifscheibe (10),
- eine Werkzeugspindel (11) zur Aufnahme und zum Drehantreiben der Topfschleifscheibe (10) um eine Werkzeug-Rotationsachse (R1), wobei die Werkzeugspindel (11) mit einem Exzenterantrieb (3) versehen ist, um die Topfschleifscheibe (10) exzentrisch bewegen zu können,
- ein Abrichtwerkzeug (30), das zum Abrichten der Topfschleifscheibe (10) ausgelegt ist,
- eine Abrichtspindel (31) zur Aufnahme und zum Drehantreiben des Abrichtwerkzeugs (30) um eine Abricht-Rotationsachse (R3),
- ein Kegelradwerkstück (40),
- eine Werkstückspindel (41) zur Aufnahme des Kegelradwerkstücks (40) und zum Drehantreiben des Kegelradwerkstücks (40) um eine Werkstück-Rotationsachse (R2),
mit den folgenden Abrichtschritten:
a) Drehantreiben der Topfschleifscheibe (10) um die Rotationsachse (R1) der Werkzeugspindel (11) mit einer ersten Drehzahl (n1),
b) Drehantreiben des Abrichtwerkzeugs (30) um die Rotationsachse (R3) der Abrichtspindel (31) mit einer zweiten Drehzahl (n3),
c) Durchführen eines Abrichtverfahrens, bei dem die Topfschleifscheibe (10) mit dem Abrichtwerkzeug (30) abgerichtet wird, wobei während dieses Schrittes zwischen der ersten Drehzahl (n1) und der zweiten Drehzahl (n3) ein vorbestimmtes, festes Drehzahlverhältnis (DV) vorgegeben wird,
und mit den folgenden Bearbeitungsschritten, die nach dem Durchführen der Abrichtschritte ausgeführt werden:
i. exzentrisches Drehantreiben der Topfschleifscheibe (10) um die Werkzeug-Rotationsachse (R1) mit einer ersten Bearbeitungsdrehzahl (n1*) unter Einsatz des Exzenterantriebs (3),
ii. Durchführen eines Schleifverfahrens, bei dem das Kegelradwerkstück (40) mit der Topfschleifscheibe (10) schleifend bearbeitet wird.

2. Verfahren nach Anspruch 1, **dadurch gekennzeichnet, dass** mindestens während des Schrittes c) ein festes Drehzahlverhältnis (DV) vorgegeben wird, das definiert ist als Verhältnis der ersten Drehzahl (n1) zur zweiten Drehzahl (n3).

3. Verfahren nach Anspruch 1, **dadurch gekennzeichnet, dass** mindestens während des Schrittes c) ein festes Drehzahlverhältnis (DV) vorgegeben wird, das definiert ist als Verhältnis der zweiten Drehzahl (n3) zur ersten Drehzahl (n1).

4. Verfahren nach Anspruch 2 oder 3, **dadurch gekennzeichnet, dass** der Wert des festen Drehzahlverhältnisses (DV) einer natürlichen Zahl 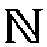 entspricht.

5. Verfahren nach Anspruch 2 oder 4, **dadurch gekennzeichnet, dass** der Wert des festen Drehzahlverhältnisses (DV) als Bruch zweier natürlicher Zahlen 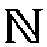 definiert ist.

6. Verfahren nach einem der Ansprüche 1 bis 5, **dadurch gekennzeichnet, dass** mindestens während des Schrittes ii. ein Exzenterverhältnis (EV) des Exzenterantriebs (3) mit einem Wert vorgegeben wird, der einer rationalen Zahl 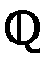 entspricht, wenn man Schwankungen des Exzenterverhältnisses (EV), die sich aus relative Shiftbewegungen zwischen der Topfschleifscheibe (10) und dem Kegelradwerkstück (40) ergeben, nicht berücksichtigt.

7. Verfahren nach einem der Ansprüche 1 bis 5, **dadurch gekennzeichnet, dass** im Schritt ii. die Topfschleifscheibe (10) relativ zum Kegelradwerkstück (40) zusätzlich zu dem Drehantreiben der Topfschleifscheibe (10) lediglich eine relative Tauchbewegung ausführt.

8. Verfahren nach einem der Ansprüche 1 bis 5, **dadurch gekennzeichnet, dass** im Schritt ii. die Topfschleifscheibe (10) relativ zum Kegelradwerkstück (40) zusätzlich zu dem Drehantreiben der Topfschleifscheibe (10) eine gekoppelte Wälzbewegung ausführt.

9. Verfahren nach einem der Ansprüche 1 bis 6, **dadurch gekennzeichnet, dass** in einem vorbereitenden Verfahrensschritt das Drehzahlverhältnis (DV) vorgebbar ist.

10. Verfahren nach Anspruch 9, **dadurch gekennzeichnet, dass** das Vorgeben des Drehzahlverhältnisses (DV) durch eine Eingabeaufforderung auf einem Bildschirm erfolgt, der mit der Vorrichtung (100) verbindbar ist.

11. Verfahren nach Anspruch 9, **dadurch gekennzeichnet, dass** das Vorgeben des Drehzahlverhältnisses (DV) über eine Steuerung (120) der Vorrichtung (100) erfolgt.

## Claims

1. A method, which is executed in a grinding machine (100), which comprises:
- a cup grinding wheel (10) provided with an abrasive surface (18.1, 18.2);
- a tool spindle (11) for accommodating and for rotationally driving the cup grinding wheel (10) around a tool-axis of rotation (R1), wherein the tool spindle (11) is provided with an eccentric drive (3) in order to be able to move the cup grinding wheel (10) excentrically,
- a dressing tool (30), which is designed for dressing the cup grinding wheel (10),
- a dressing spindle (31) for accommodating and for rotationally driving the dressing tool (30) around a dressing-axis of rotation (R3),
- a bevel gear workpiece (40),
- a workpiece spindle (41) for accommodating the bevel gear workpiece (40) and for rotationally driving the bevel gear workpiece (40) around a workpiece-axis of rotation (R2),
having the following dressing steps:
a) rotationally driving the cup grinding wheel (10) around the axis of rotation (R1) of the tool spindle (11) at a first rotational speed (n1),
b) rotationally driving the dressing tool (30) around the axis of rotation (R3) of the dressing spindle (31) at a second rotational speed (n3),
c) carrying out a dressing method, in which the cup grinding wheel (10) is dressed using the dressing tool (30), wherein a predetermined, fixed rotational speed ratio (DV) is specified between the first rotational speed (n1) and the second rotational speed (n3) during this step,
and having the following machining steps, which are executed after carrying out the dressing steps:
i. eccentrically rotationally driving the cup grinding wheel (10) around the tool-axis of rotation (R1) at a first rotational machining speed (n1*) using the eccentric drive (3),
ii. carrying out a grinding method, in which the bevel gear workpiece (40) is machined by grinding using the cup grinding wheel (10).

2. The method according to claim 1, **characterized in that**, at least during step c), a fixed rotational speed ratio (DV) is specified which is defined as the ratio of the first rotational speed (n1) to the second rotational speed (n3).

3. The method according to claim 1, **characterized in that**, at least during step c), a fixed rotational speed ratio (DV) is specified which is defined as the ratio of the second rotational speed (n3) to the first rotational speed (n1).

4. The method according to claim 2 or 3, **characterized in that** the value of the fixed rotational speed ratio (DV) corresponds to a natural number 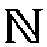 .

5. The method according to claim 2 or 4, **characterized in that** the value of the fixed rotational speed ratio (DV) is defined as a fraction of two natural numbers 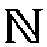 .

6. The method according to any one of claims 1 to 5, **characterized in that**, at least during step ii., an eccentric ratio (EV) of the eccentric drive (3) is specified having a value which corresponds to a rational number 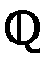 , if one does not take into consideration variations of the eccentric ratio (EV) which result from relative shift movements between the cup grinding wheel (10) and the bevel gear workpiece (40).

7. The method according to any one of claims 1 to 5, **characterized in that**, in step ii., the cup grinding wheel (10) only executes a relative plunge movement in relation to the bevel gear workpiece (40) in addition to the rotational driving of the cup grinding wheel (10).

8. The method according to any one of claims 1 to 5, **characterized in that**, in step ii., the cup grinding wheel (10) executes a coupled rolling movement in relation to the bevel gear workpiece (40) in addition to the rotational driving of the cup grinding wheel (10).

9. The method according to any one of claims 1 to 6, **characterized in that** the rotational speed ratio (DV) is specifiable in a preparatory method step.

10. The method according to claim 9, **characterized in that** the specification of the rotational speed ratio (DV) is performed by an input request on a display screen, which is connectable to the device (100).

11. The method according to claim 9, **characterized in that** the specification of the rotational speed ratio (DV) takes place via a controller (120) of the device (100).

## Revendications

1. Procédé réalisé dans une meuleuse (100) qui comprend:
- une meule-boisseau (10) munie d'une surface abrasive (18.1, 18.2),
- une broche d'outil (11) pour recevoir et faire tourner la meule-boisseau (10) autour d'un axe de rotation d'outil (R1), la broche d'outil (11) étant munie d'un entraînement à excentrique (3) pour pouvoir déplacer la meule-boisseau (10) de façon excentrique,
- un outil de dressage (30) conçu pour dresser la meule-boisseau (10),
- une broche de dressage (31) pour recevoir et faire tourner l'outil de dressage (30) autour d'un axe de rotation de dressage (R3),
- une pièce en forme de roue conique (40),
- une broche porte-pièce (41) pour recevoir la pièce en forme de roue conique (40) et pour faire tourner la pièce en forme de roue conique (40) autour d'un axe de rotation de pièce (R2),
comprenant les étapes de dressage suivantes :
a) faire tourner la meule-boisseau (10) autour de l'axe de rotation (R1) de la broche d'outil (11) à une première vitesse de rotation (n1),
b) faire tourner l'outil de dressage (30) autour de l'axe de rotation (R3) de la broche de dressage (31) à une deuxième vitesse de rotation (n3),
c) réaliser un procédé de dressage, au cours duquel la meule-boisseau (10) est dressée avec l'outil de dressage (30), dans lequel, pendant cette étape, il est défini entre la première vitesse de rotation (n1) et la deuxième vitesse de rotation (n3) un rapport de vitesse de rotation (DV) fixe prédéterminé,
et comprenant les étapes d'usinage suivantes réalisées après la réalisation des étapes de dressage :
i. faire tourner de façon excentrique la meule-boisseau (10) autour de l'axe de rotation d'outil (R1) à une première vitesse de rotation d'usinage (n1*) en utilisant l'entraînement à excentrique (3),
ii. réaliser un procédé de meulage au cours duquel la pièce en forme de roue conique (40) est usinée par meulage avec la meule-boisseau (10).

2. Procédé selon la revendication 1, **caractérisé en ce qu'**au moins pendant l'étape c) il est déterminé un rapport de vitesse de rotation (DV) fixe qui est défini comme le rapport de la première vitesse de rotation (n1) sur la deuxième vitesse de rotation (n3).

3. Procédé selon la revendication 1, **caractérisé en ce qu'**au moins pendant l'étape c) il est déterminé un rapport de vitesse de rotation (DV) fixe qui est défini comme le rapport de la deuxième vitesse de rotation (n3) sur la première vitesse de rotation (n1).

4. Procédé selon la revendication 2 ou 3, **caractérisé en ce que** la valeur du rapport de vitesse de rotation (DV) fixe correspond à un entier naturel N.

5. Procédé selon la revendication 2 ou 4, **caractérisé en ce que** la valeur du rapport de vitesse de rotation (DV) fixe est défini comme une fraction de deux entiers naturels N.

6. Procédé selon l'une des revendications 1 à 5, **caractérisé en ce qu'**au moins pendant l'étape ii., il est défini un rapport excentrique (EV) de l'entraînement à excentrique (3) avec une valeur qui correspond à un nombre rationnel Q lorsqu'on ne tient pas compte des variations du rapport excentrique (EV) qui résultent des mouvements de glissement relatifs entre la meule-boisseau (10) et la pièce en forme de roue conique (40).

7. Procédé selon l'une des revendications 1 à 5, **caractérisé en ce que** dans l'étape ii., la meule-boisseau (10) effectue uniquement un mouvement de plongée relatif par rapport à la pièce en forme de roue conique (40) en plus de la rotation de la meule-boisseau (10).

8. Procédé selon l'une des revendications 1 à 5, **caractérisé en ce que**, dans l'étape ii., la meule-boisseau (10) effectue un mouvement de roulement couplé par rapport à la pièce en forme de roue conique (40) en plus de la rotation de la meule-boisseau (10).

9. Procédé selon l'une des revendications 1 à 6, **caractérisé en ce que** le rapport de vitesse de rotation (DV) peut être prédéterminé au cours d'une étape préparatoire.

10. Procédé selon la revendication 9, **caractérisé en ce que** la détermination du rapport de vitesse de rotation (DV) se fait par une invite de commande sur un écran qui peut être relié au dispositif (100).

11. Procédé selon la revendication 9, **caractérisé en ce que** la détermination du rapport de vitesse de rotation (DV) se fait par le biais d'une commande (120) du dispositif (100).
